# EUROPÄISCHE PATENTANMELDUNG

(11) **EP 2 626 533 A1**
(43) Veröffentlichungstag der Anmeldung: **14.08.2013**
(21) Anmeldenummer: 12154238.5
(22) Anmeldetag: 07.02.2012
(51) Int. Cl.: F02C 3/30, F02C 7/08, F02C 7/047

(54) **Verfahren zum Betreiben einer Gasturbine**

(71) Anmelder: Siemens Aktiengesellschaft, 80333 München (DE)
(72) Erfinder: Butzeck, Christopher, 45481 Mülheim (DE); Deiss, Olga, 40627 Düsseldorf (DE); Eisfeld, Tjark, 45478 Mülheim a. d. Ruhr (DE); Kahlstorf, Uwe, 45478 Mülheim a.d. Ruhr (DE); Pfadler, Sebastian, 45478 Mülheim an der Ruhr (DE); Savilius, Nicolas, 45359 Essen (DE); Schumacher, Karsten, 40625 Düsseldorf (DE); Sternemann, Ansgar, 44579 Castrop-Rauxel (DE)

(57) **Zusammenfassung**

Ein Verfahren zum Betreiben einer Gasturbine (1) mit einem einen Verdichter (4), eine Brennkammer (10) und eine Turbine (12) umfassenden Strömungskanal (16), soll die Leistung einer Gasturbine bei vergleichsweise niedrigen Außentemperaturen erhöhen. Dazu wird am Austritt der Turbine (12) mittels eines ersten Wärmetauschers (22) im Strömungskanal (16) Wärmeenergie entnommen und über eine Wärmeleitung (24) vor dem Eintritt des Verdichters (4) mittels eines zweiten Wärmetauschers (26) im Strömungskanal (16) abgegeben.

## Beschreibung

### Beschreibung

### Verfahren zum Betreiben einer Gasturbine

Die Erfindung betrifft ein Verfahren zum Betreiben einer Gasturbine mit einem einen Verdichter, eine Brennkammer und eine Turbine umfassenden Strömungskanal. Sie betrifft weiter ein Wärmetauschersystem für eine derartige Gasturbine.

Eine Gasturbine im weiteren Sinne ist eine Verbrennungskraftmaschine, bestehend aus der Turbine im engeren Sinne (Expander) mit einem vorgeschalteten Verdichter und einer dazwischengeschalteten Brennkammer. Über die Beschaufelung einer oder mehrerer Verdichterstufen wird Luft komprimiert, diese anschließend in der Brennkammer mit einem gasförmigen oder flüssigen Treibstoff gemischt, gezündet und verbrannt. So entsteht ein Heißgas (Mischung aus Verbrennungsgas und Luft), das im nachfolgenden Turbinenteil entspannt, wobei sich thermische in mechanische Energie umwandelt und zunächst den Verdichter antreibt. Der verbleibende Anteil wird beim Einsatz in Kraftwerksanlagen zum Antrieb eines Generators verwendet.

Zur Leistungssteigerung wird bei stationären Gasturbinen häufig das so genannte Wet-Compression-Verfahren angewendet. Vor dem Eintritt des Verdichters wird durch eine Wassereinspritzeinrichtung wie z. B. Düsen Wasser in den Ansaugluftstrom gegeben, üblicherweise in der Größenordnung von 1% bis 2% des Ansaugmassenstromes. Zur Verminderung von Erosion an den Verdichterschaufeln ist eine möglichst kleine Tropfengröße wichtig. Stromabwärts hinter Eindüsung der Wassertropfen überschreitet die relative Luftfeuchte die Sättigungsgrenze von 100%, daher wird das Verfahren gelegentlich auch als Over-spray bezeichnet.

Grundlage der Leistungssteigerung durch die Wet Compression sind hauptsächlich zwei Mechanismen:
1) Intercooling-Effekt: Innerhalb des normalerweise mehrstufigen Turbokompressors wird durch Verdampfung der Wassertropfen eine Kühlung des Luftstromes erzielt, der Arbeitsprozess bewegt sich von der adiabaten in Richtung einer isothermen Verdichtung. Damit sinkt die spezifische Leistungsaufnahme des Verdichters und die abgegebene mechanische (Netto)-Leistung der Gasturbine steigt (ebenso wie deren Wirkungsgrad).
2) Steigerung des Massenstroms: Durch die Arbeitsturbine wird ein höherer Volumenstrom entspannt, für den eine erheblich geringere Verdichtungsarbeit im Gasturbinenkompressor aufgewendet werden muss als für die Verbrennungsluft. Damit steigt die abgegebene Nutzarbeit.

Mit dem Verfahren lassen sich Leistungssteigerungen von über 10% der Gasturbinenleistung erzielen. Aufgrund wechselnder Umgebungsbedingungen (Temperaturen, Feuchte und Druck) kann diese leistungssteigernde Maßnahme jedoch nicht immer eingesetzt werden. Wegen der hohen Fluidgeschwindigkeit in den ersten Verdichterstufen ist die statische Temperatur so gering, dass die Gefahr der Vereisung von Bauteilen besteht, wodurch mechanische und strömungstechnische Probleme hervorgerufen werden. Somit ist der Einsatz von Wet Compression nur bis zu einer gewissen Außentemperatur erlaubt, unterhalb dieser Temperatur aber nicht. Daher sinkt bei vergleichsweise niedriger Außentemperatur die Leistung der Gasturbine, falls Wet Compression aus dem genannten Grund nicht eingesetzt werden kann.

Es ist daher Aufgabe der Erfindung, ein Verfahren zum Betreiben einer Gasturbine sowie ein System anzugeben, welche die Leistung einer Gasturbine bei vergleichsweise niedrigen Außentemperaturen wieder erhöhen.

Bezüglich des Verfahrens wird die Aufgabe erfindungsgemäß gelöst, indem am Austritt der Turbine mittels eines ersten Wärmetauschers im Strömungskanal Wärmeenergie entnommen und über eine Wärmeleitung vor dem Eintritt des Verdichters mittels eines zweiten Wärmetauschers im Strömungskanal abgegeben wird.

Die Erfindung geht dabei von der Überlegung aus, dass eine Leistungserhöhung der Gasturbine bei niedrigen Außentemperaturen erreicht werden könnte, wenn der Betriebsbereich für Wet Compression hin zu derartigen Temperaturen erweitert werden könnte. Da die drohende Gefahr der Vereisung jedoch unmittelbar durch niedrige Ansauglufttemperaturen verursacht wird, sollte die Ansaugluft vorgewärmt werden. Eine separate Vorwärmeinrichtung würde jedoch einen zusätzlichen Energieverbrauch bedeuten und somit den Gesamtwirkungsgrad senken.

Hierbei ist jedoch zu berücksichtigen, dass in einem Gasturbinen-Kraftwerk durch den Betrieb der Gasturbine große Wärmemengen anfallen, die bislang z. B. über ein Lagerölsystem, Abblaseleitungen, die Abgasstrecke oder einfache Konvektion abgeführt werden. Selbst bei kombinierten Gas- und Dampfturbinen, bei denen die Abwärme der Gasturbine zur Erzeugung von Dampf genutzt wird, bleibt ein nicht unerheblicher Teil der abgeführten Wärmeenergie ungenutzt.

Daher sollte ein erster Wärmetauscher im Abgastrakt hinter dem Austritt der Gasturbine zur Anwendung kommen, über den ein bestimmter Teil der Wärme aufgenommen wird. Über einen mit dem ersten Wärmetauscher über eine Wärmeleitung verbundenen zweiten Wärmetauscher, der vor dem Verdichter der Gasturbine angebracht ist, wird der einströmenden Luft arbeitslos Wärme zugeführt. Dadurch wird die Luft erwärmt und damit die Gefahr von Vereisung verringert. Dadurch kann das Wet-Compression-Verfahren auch bei niedrigeren Außentemperaturen angewendet werden und die Leistung der Gasturbine wird erhöht.

Vorteilhafterweise wird dazu zwischen dem zweiten Wärmetauscher und dem Eintritt des Verdichters Wasser in den Strömungskanal eingespritzt. Die Wassereinspritzung geschieht somit in die bereits erwärmte Ansaugluft, so dass ein Vereisen des Verdichterszuverlässig vermieden wird. Vorteilhafterweise wird eine Gasturbine mit dem beschriebenen Verfahren betrieben.

Bezüglich des Systems wird die Aufgabe gelöst durch ein Wärmetauschersystem für eine Gasturbine mit einem einen Verdichter, eine Brennkammer und eine Turbine umfassenden Strömungskanal, bei dem am Austritt der Turbine ein erster Wärmetauscher im Strömungskanal angeordnet ist, und vor dem Eintritt des Verdichters ein über eine Wärmeleitung mit dem ersten Wärmetauscher verbundener zweiter Wärmetauscher im Strömungskanal angeordnet ist.

In vorteilhafter Ausgestaltung ist dabei der jeweilige Wärmetauscher aus dem Strömungskanal bewegbar angeordnet. Da die Erwärmung der Ansaugluft vor dem Verdichter nicht in allen Betriebszuständen von Vorteil ist und zusätzlich Wirkungsgradverluste aufgrund von Totaldruckverlusten einer zusätzlich Rohrstruktur im Strömungskanal mit sich bringen kann, sollten die Wärmetauscher nämlich so angebracht werden, dass diese aus der Strömung genommen werden können. Dies kann mittels mechanischer Systeme geschehen, bei denen zur aerodynamischen Optimierung die entstehenden Lücken im Strömungskanal mit einfachen Blenden wieder geschlossen werden.

In weiterer oder alternativer vorteilhafter Ausgestaltung ist der jeweilige Wärmetauscher in einen Schalldämpfer integriert. Durch die Integration von Wärmetauscher und Schalldämpfer in der Art einer Doppelnutzung werden Wirkungsgradverluste ebenfalls minimiert.

Vorteilhafterweise umfasst eine Gasturbine ein derartiges Wärmetauschersystem.

Vorteilhafterweise ist dabei zwischen dem zweiten Wärmetauscher und dem Eintritt des Verdichters eine Wassereinspritzeinrichtung im Strömungskanal angeordnet.

Eine Kraftwerksanlage umfasst dabei vorteilhafterweise eine beschriebene Gasturbine. Neben der Anwendung in reinen Gasturbinenkraftwerken können das beschriebene Verfahren und das beschriebene Wärmetauschersystem auch in kombinierten Gas- und Dampfturbinenkraftwerken zur Anwendung kommen. Ebenso lässt sich das System nachträglich in bereits bestehende Gasturbinen nachrüsten.

Die mit der Erfindung erzielten Vorteile bestehen insbesondere darin, dass durch die arbeitsneutrale Vorwärmung der Ansaugluft vor dem Verdichter mittels eines Wärmetauschers die Temperatur der eingesaugten Luft soweit erhöht werden kann, dass die Vereisung erst bei tieferen Temperaturen eintritt, als durch die Außenlufttemperatur eigentlich vorgegeben ist. Einerseits ist somit der Einsatz von Wet Compression bei tieferen Temperaturen möglich, was die Leistung bei derartigen Temperaturen erhöht, andererseits kann vor allem bei reinen Gasturbinenanlagen der Betrieb ohne Wet Compression zu tieferen Außentemperaturen verschoben werden, so dass die Gasturbinenanlage flexibler einsetzbar ist.

Weiterhin werden im Anfahrbetrieb Verdichterelemente wie Schaufeln und die Strömungskanalbegrenzung schneller aufgewärmt, so dass sich die Anfahrzeit der Gasturbine verkürzt. Schließlich wird vermieden, dass bei sehr tiefen Außentemperaturen die Eintrittsluft durch bereits erhitzte Verdichterendluft erwärmt werden muss. Durch den Wärmetauscher, der die Wärme aus dem Gasturbinenaustritt nutzt, fällt dieser Wirkungsgradverlust weg. Der Gesamtwirkungsgrad der Maschine erhöht sich damit.

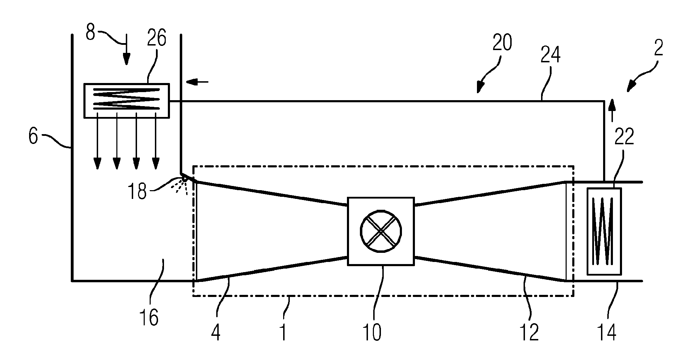

Die Erfindung wird anhand einer Zeichnung näher erläutert. Darin zeigt die Figur eine schematische Darstellung einer Gasturbine in einem Gasturbinenkraftwerk.

Die Gasturbine 1 ist in der FIG ausschnittsweise schematisch dargestellt und ist Bestandteil einer Kraftwerksanlage 2. Die Gasturbine 1 umfasst einen Verdichter 4, in dem durch einen dem Verdichter 4 vorgeschalteten Ansaugkanal 6 angesaugte Luft 8 komprimiert und dabei erwärmt wird. Dem Verdichter 4 ist eine Brennkammer 10 nachgeschaltet, in der in die vom Verdichter 4 komprimierte Luft z. B. Gas eingeführt und gezündet wird.

Das so entstandene Heißgasgemisch wird in einer Turbine 12, die der Brennkammer 10 nachgeschaltet ist, entspannt und erzeugt hier rotatorische mechanische Energie, die zum Antrieb des Verdichters 4 und eines nicht näher dargestellten Generators der Kraftwerksanlage 2 genutzt wird. Das entspannte Gas wird in einen Abgaskanal 14 geleitet. Ansaugkanal 6, Verdichter 4, Brennkammer 10, Turbine 12 und Abgaskanal 14 bilden damit in dieser Reihenfolge den Strömungskanal 16 der Gasturbine 1.

Am Eintritt des Verdichters 4 ist eine Einspritzeinrichtung 18 angeordnet. Diese erhöht als Wet-Compression-System die Leistung der Gasturbine 1. Um auch bei niedrigen Außentemperaturen die Einspritzeinrichtung 18 in Betrieb nehmen zu können, weist die Gasturbine 1 ein Wärmetauschersystem 20 auf.

Das Wärmetauschersystem 20 umfasst einen ersten Wärmetauscher 22 im Abgaskanal 14 der Gasturbine 1. Über eine Wärmeleitung 24, die mit einem entsprechend für Wärmetauscher effizienten Fluid als Übertragungsmedium gefüllt ist, ist der Wärmetauscher 22 mit einem zweiten Wärmetauscher 26 verbunden, der im Ansaugkanal 6 noch vor der Einspritzeinrichtung 18 angeordnet ist. Abwärme der Gasturbine 1 wird somit über die Wärmeleitung 24 zum Wärmetauscher 26 übertragen und zur Erwärmung von kalter angesaugter Luft 8 genutzt.

Der erste Wärmetauscher 26 ist so ausgestaltet, dass er aus dem Strömungskanal 16 weggeklappt werden kann. Kommt er nicht zum Einsatz, wird so die angesaugte Luft 8 nicht wirkungsgradmindernd behindert.

Zur Wirkungsgradsteigerung kann auch bei der Nichtnutzung des Wärmetauschersystems der Wärmetauscher 22 aus dem Strömungskanal 16 wegklappbar gestaltet werden.

## Patentansprüche

1. Verfahren zum Betreiben einer Gasturbine (1) mit einem einen Verdichter (4), eine Brennkammer (10) und eine Turbine (12) umfassenden Strömungskanal (16), bei dem am Austritt der Turbine (12) mittels eines ersten Wärmetauschers (22) im Strömungskanal (16) Wärmeenergie entnommen und über eine Wärmeleitung (24) vor dem Eintritt des Verdichters (4) mittels eines zweiten Wärmetauschers (26) im Strömungskanal (16) abgegeben wird.

2. Verfahren nach Anspruch 1,
bei dem zwischen dem zweiten Wärmetauscher (26) und dem Eintritt des Verdichters (4) Wasser in den Strömungskanal (16) eingespritzt wird.

3. Gasturbine (1),
betrieben mit dem Verfahren nach einem der vorhergehenden Ansprüche.

4. Wärmetauschersystem (20) für eine Gasturbine (1) mit einem einen Verdichter (4), eine Brennkammer (10) und eine Turbine (12) umfassenden Strömungskanal (16), bei dem am Austritt der Turbine (12) ein erster Wärmetauscher (22) im Strömungskanal (16) angeordnet ist, und vor dem Eintritt des Verdichters (4) ein über eine Wärmeleitung (24) mit dem ersten Wärmetauscher (22) verbundener zweiter Wärmetauscher (26) im Strömungskanal (16) angeordnet ist.

5. Wärmetauschersystem (20) nach Anspruch 4,
bei dem der jeweilige Wärmetauscher (22, 26) aus dem Strömungskanal (16) bewegbar angeordnet ist.

6. Wärmetauschersystem (20) nach Anspruch 4 oder 5,
bei dem der jeweilige Wärmetauscher (22, 26) in einen Schalldämpfer integriert ist.

7. Gasturbine (1) mit einem Wärmetauschersystem (22) nach einem der Ansprüche 4 bis 6.

8. Gasturbine (1) nach Anspruch 7,
bei der zwischen dem zweiten Wärmetauscher (26) und dem Eintritt des Verdichters (4) eine Wassereinspritzeinrichtung (18) im Strömungskanal (16) angeordnet ist.

9. Kraftwerksanlage (2) mit einer Gasturbine (1) nach einem der Ansprüche 3, 7 oder 8.
